# EUROPÄISCHE PATENTSCHRIFT

(11) **EP 4 561 900 B1**
(45) Veröffentlichungstag und Bekanntmachung des Hinweises auf die Patenterteilung: **28.01.2026**
(21) Anmeldenummer: 23802244.6
(22) Anmeldetag: 08.11.2023
(51) Int. Cl.: B64D 11/06

(54) **FLUGGASTSITZ**
AIRCRAFT PASSENGER SEAT
SIÈGE PASSAGER D'AÉRONEF

(30) Priorität: 08.11.2022 DE 102022129527
(43) Veröffentlichungstag der Anmeldung: 04.06.2025
(73) Patentinhaber: ZIM Aircraft Seating GmbH, 88090 Immenstaad am Bodensee (DE)
(72) Erfinder: BOPP, Metin Albert, 88069 Tettnang (DE); ALTUNBAS, Alper, 88690 Uhldingen-Mühlhofen (DE)
(74) Vertreter: RavensPAT Patentanwälte Partnerschaft mbB
(86) Internationale Anmeldenummer: PCT/EP2023/081113
(87) Internationale Veröffentlichungsnummer: WO 2024/100098

(56) Entgegenhaltungen:
- EP-B1- 1 207 074
- WO-A1-2020/041616
- GB-A- 2 569 289

## Beschreibung

### Stand der Technik

Zur Ausstattung von Passagierflugzeugen, insbesondere von Langstreckenflugzeugen sind Fluggastsitze mit einem oder mehreren Sitzplätzen in einer Vielzahl von Ausführungen beispielsweise aus der EP 1 207 074 B1, der WO 2020/041616 A1 oder der GB 2569289 A bekannt.

Ein Sitzplatz weist einen Sitzboden und zumeist auch eine Rückenlehne auf, wobei an einem Sitzplatz eines Fluggastsitzes nahezu immer verschiedene Sitzpositionen durch Lageänderungen des Sitzbodens, der Rückenlehne und häufig beider Teile einstellbar sind. Dadurch können Passagiere zwischen aktiveren Sitzhaltungen in einer "upright position", z.B. für einen Verzehr von Mahlzeiten oder für den Start und die Landung, und passiveren Sitzhaltungen in einer "reclined position", z.B. zum Entspannen und Schlafen, nach Belieben wechseln.

Insbesondere sind verschiedene Lösungen zur Bewegungen des Sitzbodens und/oder der Rückenlehne bekannt. Durch eine Bewegung des Sitzbodens und/oder der Rückenlehne lassen sich Sitzeinstellungen vorgeben, die beispielsweise den Bewegungsraum, den sogenannten "living space" benachbarter Fluggäste, insbesondere in einer dahinter angeordneten Sitzreihe, möglichst wenig beeinträchtigen.

Aufgrund der Anforderung im Luftverkehr, Sitzeinrichtungen möglichst leicht auszuführen und den verfügbaren "living space" eines Nutzers bestmöglich auszureizen, stellt die Konstruktion von bequem einstellbaren, vergleichsweise leichten, vergleichsweise günstigen und zugleich stabilen Fluggastsitzen eine besondere Herausforderung dar.

### Aufgabe und Vorteile der Erfindung

Aufgabe der vorliegenden Erfindung ist es, einen verbesserten Fluggastsitz bereitzustellen. Insbesondere einen Fluggastsitz bereitzustellen, welcher eine verbesserte Komfortfunktion aufweist.

Diese Aufgabe wird durch einen Fluggastsitz mit den Merkmalen des Anspruchs 1 gelöst.

Weitere mögliche Ausführungsformen der Erfindung sind in den Unteransprüchen aufgeführt.

Die Erfindung geht von einem Fluggastsitz aus, wobei der Fluggastsitz ein Gestell, eine Sitzflächengruppe und ein Rückenlehnenelement aufweist, wobei die Sitzflächengruppe ein Sitzflächenelement aufweist, wobei das Sitzflächenelement eine Sitzfläche bereitstellt, auf welcher ein Nutzer des Fluggastsitz unmittelbar sitzen kann, wobei die Sitzflächengruppe ein Wickelelement und eine erste Wickelwelle aufweist, wobei ein erstes Ende des Wickelelements mit der ersten Wickelwelle verbunden ist, wobei die erste Wickelwelle um eine erste Wickelachse drehbar vorhanden ist, wobei bei einer Drehung der ersten Wickelwelle um die erste Wickelachse das Wickelelement im Bereich des ersten Endes des Wickelelements auf die erste Wickelwelle aufwickelbar oder von der ersten Wickelwelle abwickelbar vorhanden ist, wobei das Sitzflächenelement mit dem Wickelelement verbunden ist, sodass bei einer Drehung der ersten Wickelwelle das Sitzflächenelement bewegt wird. Hierdurch ist ein Fluggastsitz mit einer vergleichsweise komfortablen Sitzfläche realisiert, insbesondere ist hierdurch ein vergleichsweise leichter und/oder günstiger Fluggastsitz bei vergleichbarer Komfortfunktion realisiert.

Im Folgenden genannte Richtungsbezüge sind vorteilhafterweise auf die Sitzrichtung des Fluggastsitz bezogen. Beispielsweise ist die Sitzrichtung des Fluggastsitz im angeordneten Zustand des Fluggastsitzes im Flugzeug auch die Flugrichtung des Flugzeugs.

Beispielsweise ist das Gestell zur Befestigung an einem Boden an einer Fluggastkabine vorgesehen. Zum Beispiel weist das Gestell einen Sitzteiler und quer zur Sitzrichtung verlaufende Holme auf, wobei der Sitzteiler durch die Holme gehalten ist.

Beispielsweise weist das Gestell zwei Sitzteiler auf. Denkbar ist, dass die beiden Sitzteiler mittels eines Holms miteinander verbunden sind. Vorstellbar ist auch, dass die Sitzteiler zur Befestigung des Fluggastsitzes am Boden einer Fluggastkabine vorgesehen sind. Das Gestell umfasst beispielsweise eine insbesondere feste Umhausung des Rückenlehnenelements. Die Umhausung ist beispielsweise als eine Rückenlehnenschale ausgebildet. Durch die Rückenlehnenschale ist beispielsweise eine Ausdehnung des Fluggastsitzes, beispielsweise entgegen einer Sitzrichtung, in einem rückwärtigen Bereich insbesondere unveränderlich festgelegt.

Beispielsweise ist das Sitzflächenelement dazu ausgebildet, eine Sitzfläche für einen Nutzer bereitzustellen und das Rückenlehnenelement eine Anlehnfläche für einen Rücken eines Nutzers des Fluggastsitz. Erfindungsgemäß ist das Sitzflächenelement als eine Sitzschale oder als ein Sitzkissen ausgebildet.

Beispielsweise ist das Sitzflächenelement unlösbar mit dem Wickelelement verbunden. Zum Beispiel ist das Sitzflächenelement mit dem Wickelelement verklebt, vernietet oder vernäht. Denkbar ist jedoch auch, dass das Sitzflächenelement lösbar mit dem Wickelelement verbunden ist. Zum Beispiel ist das Sitzflächenelement mit dem Wickelelement über eine Klettverbindung lösbar verbunden. Denkbar ist auch, dass das Sitzflächenelement mit dem Wickelelement mittels einer Hakenverbindung lösbar verbunden ist.

Beispielsweise weist die Sitzflächengruppe eine zweite Wickelwelle auf. Denkbar ist auch, dass die erste und die zweite Wickelwelle voneinander beabstandet vorhanden sind, wobei ein zweites Ende des Wickelelements mit der zweiten Wickelwelle verbunden ist, wobei das erste und das zweite Ende des Wickelelements sich gegenüberliegend und voneinander beabstandet vorhanden sind.

Zum Beispiel weist der Fluggastsitz eine Rückenlehne auf. Denkbar ist, dass die Rückenlehne das Rückenlehnenelement umfasst. Beispielsweise weist die Rückenlehne oder das Rückenlehnenelement einen Rahmen auf. Vorstellbar ist, dass der Rahmen mit dem Gestell verbunden ist. Beispielsweise ist der Rahmen unbeweglich und/oder positionsfest zum Gestell vorhanden. Denkbar ist, dass der Rahmen als ein formstabiles Element ausgebildet ist.

Beispielsweise erstreckt sich die erste Wickelachse der ersten Wickelwelle quer zur Sitzrichtung. Beispielsweise ist die erste Wickelachse parallel zu einer Längsachse des Holms ausgerichtet. Vorstellbar ist, dass die erste Wickelwelle mit einem Sitzteiler verbunden ist. Denkbar ist, dass die erste Wickelwelle an einem Sitzteiler beweglich gelagert ist. Beispielsweise verbindet die erste Wickelwelle zwei Sitzteiler miteinander. Beispielsweise verbindet die erste Wickelwelle die beiden Sitzteiler der Fluggastsitz miteinander.

Vorstellbar ist, dass die erste und/oder die zweite Wickelwelle unterhalb des Sitzflächenelements ausgebildet sind. Denkbar ist, dass die erste und/oder die zweite Wickelwelle auf einer der Sitzfläche gegenüberliegenden Seite des Sitzflächenelements vorhanden sind.

Beispielsweise ist der Fluggastsitz derart ausgebildet, dass eine Bewegung des Sitzflächenelements parallel zur Sitzrichtung erfolgt. Zum Beispiel ist die Bewegung des Sitzflächenelements eine rein lineare Bewegung. Denkbar ist auch, dass die Bewegung des Sitzflächenelements als eine Schwenk-Schiebebewegung ausgebildet ist.

Erfindungsgemäß sind das Sitzflächenelement und das Wickelelement an einem Verbindungsbereich miteinander verbunden, wobei der Verbindungsbereich als eine Fläche vorhanden ist, an welcher das Sitzflächenelement und das Wickelelement aneinander anstehen. Denkbar ist, dass dieser flächige Verbindungsbereich eine lineare Bewegung in Richtung der Flächenerstreckung des Verbindungsbereichs bei einer Drehung des ersten Wickelelements ausführt.

Auch wird vorgeschlagen, dass die zweite Wickelwelle um eine zweite Wickelachse drehbar vorhanden ist, wobei die erste und die zweite Wickelwelle miteinander gekoppelt sind, sodass bei einer Drehung der ersten Wickelwelle aufgrund der Kopplung der Wickelwellen eine Drehung der zweiten Wickelwelle realisiert ist oder umgekehrt. Hierdurch ist eine vergleichsweise stabile Mechanik realisiert.

Beispielsweise erstreckt sich die zweite Wickelachse der zweiten Wickelwelle quer zur Sitzrichtung. Beispielsweise ist die zweite Wickelachse parallel zu einer Längsachse des Holms ausgerichtet. Vorstellbar ist, dass die zweite Wickelwelle mit einem Sitzteiler verbunden ist. Denkbar ist, dass die zweite Wickelwelle an einem Sitzteiler beweglich gelagert ist. Beispielsweise verbindet die zweite Wickelwelle zwei Sitzteiler miteinander. Beispielsweise verbindet die zweite Wickelwelle die beiden Sitzteiler der Fluggastsitz miteinander. Denkbar ist, dass die erste und die zweite Wickelwelle parallel zueinander ausgerichtet vorhanden sind.

Zum Beispiel sind die erste und die zweite Wickelwelle in Sitzrichtung und/oder in Flugrichtung voneinander beabstandet. Beispielsweise sind die erste und die zweite Wickelwelle in Sitzrichtung und/oder in Flugrichtung voneinander beabstandet vorhanden. Beispielsweise liegen die erste und die zweite Wickelwelle in einer Wickelwellenebene. Zum Beispiel ist die Wickelwellenebene horizontal ausgerichtet vorhanden.

Beispielsweise sind die erste und/oder die zweite Wickelwelle drehbar am Gestell gelagert. Denkbar ist, dass ein Drehlager vorhanden ist, mittels welchem die erste und/oder die zweite Wickelwelle drehbar gelagert vorhanden sind. Beispielsweise sind die Drehlager positionsfest zueinander am Gestell angeordnet. Denkbar ist, dass die Drehlager positionsfest am Gestell befestigt sind.

Beispielsweise ist ein Drehbereich der ersten und/oder der zweiten Wickelwelle um die erste und/oder die zweite Wickelachse begrenzt. Zum Beispiel ist ein Anschlag vorhanden, welcher eine Drehung der ersten und/oder zweiten Wickelwelle begrenzt. Denkbar ist, dass der Anschlag am Gestell angeordnet ist. Beispielsweise ist die erste Wickelwelle und/oder die zweite Wickelwelle in einem Drehbereich von 450°, 360°, 270°, 180°, 90° oder 45° hin- und herbewegbar. Beispielsweise liegt der Drehbereich der ersten Wickelwelle und/oder der zweiten Wickelwelle in einem Bereich von 30° bis 450°, z.B. in einem Bereich von 45° bis 360°, z.B. in einem Bereich von 45° bis 270°.

Zum Beispiel ist das Wickelelement mit einem zweiten Ende des Wickelelements mit der zweiten Wickelwelle verbunden. Beispielsweise sind die erste und die zweite Wickelwelle mittels des Wickelelements miteinander gekoppelt. Denkbar ist, dass eine Bewegung der ersten Wickelwelle über das Wickelelement mit einer Bewegung der zweiten Wickelwelle gekoppelt ist. Beispielsweise ist eine Bewegung der ersten und der zweiten Wickelwelle durch das Wickelelement synchronisiert. Vorstellbar ist auch, dass das Wickelelement mit dem zweiten Ende mit dem Gestell verbunden ist. Beispielsweise ist das zweite Ende des Wickelelements positionsfest am Gestell angeordnet. Denkbar ist, dass das zweite Ende des Wickelelements unmittelbar am Gestell angeordnet ist.

Denkbar ist, dass die erste und die zweite Wickelwelle in die gleiche Richtung drehen. Beispielsweise sind die erste und die zweite Wickelwelle durch das Wickelelement derart verbunden, dass ein Aufwickeln des Wickelelements auf die erste Wickelwelle ein Abwickeln des Wickelelements von der zweiten Wickelwelle bewirkt. Vorstellbar ist auch, dass die erste und die zweite Wickelwelle derart miteinander gekoppelt sind, dass die erste und die zweite Wickelwelle in entgegengesetzte Drehrichtungen drehen.

Weiter wird vorgeschlagen, dass das Wickelelement in Form eines Tuchs oder in Form eines Bands vorhanden ist. Hierdurch ist das Wickelelement vergleichsweise kostengünstig ausgebildet. Beispielsweise ist das Wickelelement hierdurch vergleichsweise robust ausgebildet.

Beispielsweise ist das Wickelelement aus einem Stoff, aus einem Gewebe oder aus einem Textil ausgebildet. Denkbar ist auch, dass das Wickelelement aus einem Kunststoff, z.B. aus einem elastischen Kunststoff, ausgebildet ist. Beispielsweise ist das Wickelelement aus einem Gummi hergestellt. Denkbar ist, dass das Wickelelement elastisch vorhanden ist, sodass eine Länge des Wickelelements durch Auf- oder Abwickeln des Wickelelements auf oder von der ersten Wickelwelle veränderbar ist. Vorstellbar ist jedoch auch, dass eine Ausdehnung, z.B. eine Länge oder eine Breite des Wickelelements unveränderlich ist. Beispielsweise ist das Wickelelement in einer Erstreckungsrichtung unelastisch ausgebildet.

Beispielsweise ist an einem ersten Ende des Wickelelements eine Keder vorhanden. Denkbar ist, dass am ersten Ende des Wickelelements eine erste Kederleiste ausgebildet oder angeordnet ist. Vorstellbar ist auch, dass am zweiten Ende des Wickelelements eine Keder vorhanden ist. Denkbar ist, dass am zweiten Ende des Wickelelements eine zweite Kederleiste ausgebildet oder angeordnet ist. Beispielsweise ist ein Abstand der Kederleiste am ersten Ende des Wickelelements von der Kederleiste am zweiten Ende des Wickelelements unveränderlich.

Ebenfalls wird vorgeschlagen, dass die erste Wickelwelle einen Schlitz aufweist und das Wickelelement am Schlitz der ersten Wickelwelle in Form einer Nut-Feder-Verbindung mit dem ersten Ende des Wickelelements aufgeschoben vorhanden ist. Hierdurch ist das Wickelelement vergleichsweise einfach und sicher mit der ersten Wickelwelle verbindbar.

Denkbar ist, dass die zweite Wickelwelle einen Schlitz aufweist. Vorstellbar ist, dass das Wickelelement mit der ersten Kederleiste auf oder in den Schlitz der ersten Wickelwelle aufgeschoben oder eingeschoben ist. Denkbar ist, dass das Wickelelement mit der zweiten Kederleiste auf oder in den Schlitz der zweiten Wickelwelle aufgeschoben oder eingeschoben ist. Beispielsweise bilden der Schlitz der Wickelwelle und die Kederleiste eine Nut-Feder-Verbindung.

Außerdem wird vorgeschlagen, dass ein Abstand der ersten Wickelwelle von der zweiten Wickelwelle unveränderlich vorhanden ist. Denkbar ist, dass ein Abstand der ersten Wickelachse von der zweiten Wickelachse in einer Richtung quer zu den Wickelachsenerstreckungen konstant ist. Denkbar ist, dass die erste und die zweite Wickelachse zueinander parallel ausgerichtet vorhanden sind.

Weiter wird vorgeschlagen, dass der Fluggastsitz ein Verriegelungselement aufweist, wobei eine Bewegung der ersten Wickelwelle und/oder eine Bewegung der zweiten Wickelwelle durch das Verriegelungselement blockierbar ist. Hierdurch ist der Fluggastsitz in einer Position festlegbar, z.B. in der Start- und Landeposition.

Beispielsweise ist das Verriegelungselement als ein Hebel ausgebildet. Denkbar ist, dass das Verriegelungselement in den Schlitz der ersten und/oder der zweiten Wickelwelle eingreift und dadurch die Wickelwelle drehfest festlegt. Beispielsweise ist das Verriegelungselement mit einem Drehlager der ersten und/oder der zweiten Wickelwelle gekoppelt, sodass eine Verriegelung des Drehlagers realisierbar ist.

Auch wird vorgeschlagen, dass die erste Wickelwelle von einer Ausgangsposition in eine Zwischenposition um die erste Wickelachse drehbar vorhanden ist, wobei der Fluggastsitz ein Federelement aufweist, wobei die erste Wickelwelle durch das Federelement mit einer Federkraft des Federelements beaufschlagt ist, sodass die erste Wickelwelle durch die Federkraft des Federelements von der Zwischenposition in die Ausgangsposition zurückbewegbar ist. Hierdurch ist die Komfortfunktion des Fluggastsitz vergleichsweise erhöht.

Beispielsweise befindet sich der Fluggastsitz in der Ausgangsposition in der "upright position". Zum Beispiel befindet sich der Fluggastsitz in der Zwischenposition in einer "reclined position". In der "upright position" befindet sich der Fluggastsitz beispielsweise beim Start- und Landevorgang. In der "reclined position" des Fluggastsitz kann der Fluggast eine vergleichsweise entspannte "Liegeposition" einnehmen, z.B. in einer Zeit zwischen dem Start- und Landevorgang.

Beispielsweise ist das Federelement in Form einer Spiralfeder oder als eine Schenkelfeder ausgebildet. Beispielsweise entspricht eine Drehposition der ersten Wickelwelle in der Ausgangsposition und eine Drehposition der ersten Wickelwelle in der Zwischenposition einem Wert zwischen 30° und 450°. Beispielsweise kann die erste Wickelwelle ausgehend von der Ausgangsposition um die erste Wickelachse bis zur Zwischenposition um 30° bis 450° gedreht werden.

Ebenfalls wird vorgeschlagen, dass das Sitzflächenelement lösbar mit dem Wickelelement verbunden ist. Hierdurch ist eine vergleichsweise einfache Wartung des Fluggastsitz realisierbar. Beispielsweise erstreckt sich das Wickelelement von der ersten Wickelwelle zur zweiten Wickelwelle entlang einer Wickelelementfläche. Denkbar ist, dass das Sitzflächenelement über eine Fläche kleiner 90% der Wickelelementfläche mit dem Wickelelement verbunden ist. Beispielsweise ist das Sitzflächenelement über eine Fläche kleiner 70% der Wickeelementfläche mit dem Wickelelement verbunden.

Beispielsweise ist der Fluggastsitz derart ausgebildet, dass aufgrund einer Bewegung einer Person, welche auf der Sitzfläche sitzt, eine Bewegung des Sitzflächenelements realisierbar ist. Denkbar ist, dass durch eine Bewegung einer Person eine Bewegung der Sitzfläche und daraus resultierend eine Bewegung der ersten Wickelwelle erfolgt.

Beispielsweise weist der Fluggastsitz ein Bedienelement auf, welches mit der ersten Wickelwelle gekoppelt ist. Beispielsweise ist durch eine Bewegung oder Bedienung des Bedienelements eine Drehung der ersten Wickelwelle realisierbar. Denkbar ist, dass der Bedienhebel als ein Drehrad oder als ein Hebel ausgebildet ist. Beispielweise ist der Bedienhebel unmittelbar mit der ersten Wickelwelle verbunden. Vorstellbar ist auch, dass der Bedienhebel mittels einer Bewegungsmechanik mit der ersten Wickelwelle gekoppelt ist.

Außerdem wird vorgeschlagen, dass eine Zugvorrichtung vorhanden ist, wobei die Zugvorrichtung dazu ausgebildet ist, das Rückenlehnenelement der Rückenlehne einzustellen, wobei die Zugvorrichtung ein Einstellelement aufweist, wobei das Einstellelement mit einer Wickelwelle, z.B. der ersten Wickelwelle, verbunden ist, wobei bei einer Drehbewegung der Wickelwelle das Einstellelement auf die Welle aufgewickelt oder abgewickelt wird, wobei durch den Wickelvorgang des Einstellelements eine Position des Rückenlehnenelements verändert wird. Hierdurch ist eine vergleichsweise einfache Einstellbarkeit des Rückenlehnenelements realisiert. Beispielsweise ist hierdurch die Einstellung des Rückenlehnenelements mit einer Einstellung des Sitzflächenelements koppelbar.

Eine beispielhafte Ausgestaltung der Erfindung ist eine Sitzreihe mit einem Fluggastsitz nach einer der vorhergehenden Ausführungsformen.

Eine weiter beispielhafte Ausgestaltung der Erfindung ist ein Flugzeug mit einem Fluggastsitz nach einer der vorhergehend genannten Ausführungen oder eine Sitzreihe nach einer der vorgenannten Ausführungsformen.

### Figurenbeschreibung

Weitere Merkmale und Vorteile der Erfindung sind anhand schematisch gezeigter Ausführungsbeispiele näher erläutert. Im Einzelnen zeigt:
- Figur 1: eine Fluggastsitzreihe in einer schematischen Darstellung von schräg seitlich vorne oben,
- Figur 2: die Fluggastsitzreihe gemäß Figur 1 in einer Seitenansicht,
- Figur 3,: ein Ausschnitt der Fluggastsitzreihe gemäß Figur 2, wobei Komponenten eines Fluggastsitz der Fluggastsitzreihe unsichtbar gehalten sind
- Figur 4: ein Wickelelement angeordnet an Wickelwellen einer Sitzflächengruppe in einer Ansicht von schräg seitlich oben,
- Figur 5: ein Wickelelement angeordnet an einer Wickelwelle einer Sitzflächengruppe in einer Ansicht von schräg seitlich unten,
- Figur 6: eine schematische Darstellung einer Anordnung eines Wickelelements an einer Wickelwelle und
- Figur 7: eine Sitzflächengruppe in einer schematischen Darstellung von schräg seitlich oben.

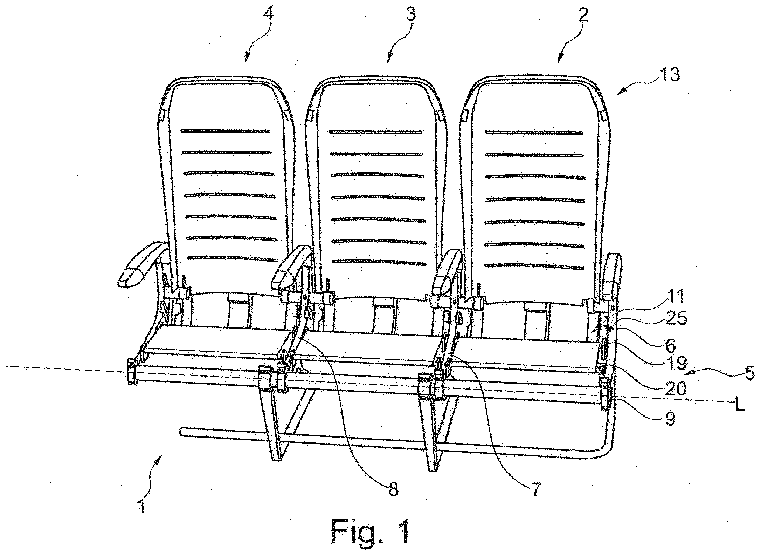

In Figur 1 ist eine Fluggastsitzreihe 1 mit Fluggastsitzen 2 bis 4 gezeigt. Die Fluggastsitze 2 bis 4 weisen ein Gestell 5 auf. Beispielsweise weist das Gestell 5 Sitzteiler 6, 7, 8 auf, welche mittels Holmen 9, 10 miteinander verbunden sind. Zum Beispiel erstreckt sich ein Holm 9 entlang einer Längsachse L.

Erfindungsgemäß weist ein Fluggastsitz 2 eine Sitzflächengruppe 11 und ein Rückenlehnenelement 12 einer Rückenlehne 13 auf. Beispielsweise weist die Rückenlehne 13 eine Umhausung in Form einer Rückenlehnenschale 14 und einen Rahmen 15 auf.

Erfindungsgemäß weist die Sitzflächengruppe 11 ein Wickelelement 16 und eine erste Wickelwelle 17 auf. Beispielsweise weist die Sitzflächengruppe 11 eine zweite Wickelwelle 18 auf. Beispielsweise ist die erste Wickelwelle 17 und/oder die zweite Wickelwelle 18 um eine erste Wickelachse W1 bzw. um eine zweite Wickelachse W2 drehbar gelagert vorhanden. Denkbar ist, dass die erste Wickelwelle 17 mittels eines Federelements 25 federbelastet vorhanden ist.

Beispielsweise ist die erste Wickelwelle 17 beweglich gelagert an einem Drehlager 19 des Gestells 5 angeordnet. Denkbar ist auch, dass die zweite Wickelwelle 18 beweglich an einem weiteren Drehlager 20 des Gestells 5 gelagert ist. Vorstellbar ist jedoch auch, dass das weitere Drehlager 20 am Gestell 5 unbeweglich festgelegt ist.

Beispielsweise weist das Wickelelement 16 an seinem ersten Ende 21 eine Keder 22 auf. Beispielsweise ist die Keder 22 mittels einer Kederleiste 23 verstärkt. Z.B. ist die Kederleiste 23 stabartig, z.B. als ein Stab vorhanden. Beispielsweise weist die erste Wickelwelle 17 einen Schlitz 24 auf, mittels welchem der Keder 22 vergleichsweise einfach auf die erste Wickelwelle 17 anordenbar ist. Denkbar ist, dass das Wickelelement 16 an seinem zweiten Ende 26 analog zum ersten Ende 21 ausgebildet ist.

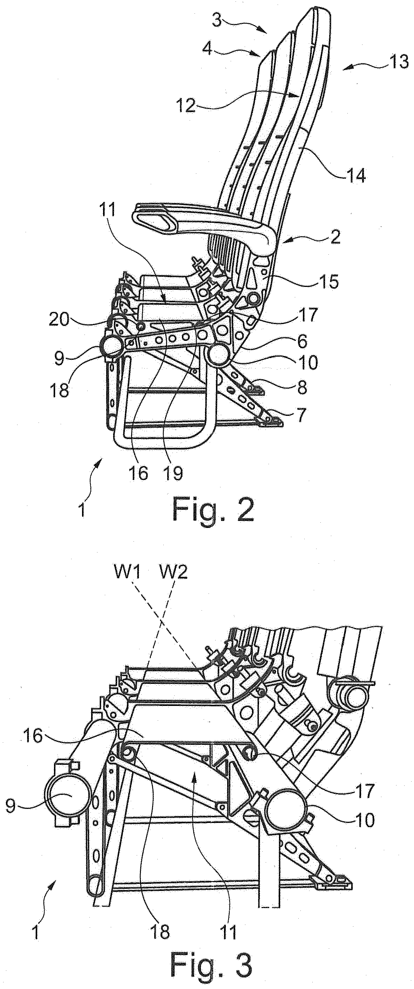

Beispielsweise erstreckt sich das Wickelelement 16 von der ersten Wickelwelle 17 zur zweiten Wickelwelle 18 entlang einer Wickelelementfläche 27. Erfindungsgemäß ist an der Wickelelementfläche 27 ein Sitzflächenelement befestigt (in den Figuren 1 bis 6 nicht dargestellt).

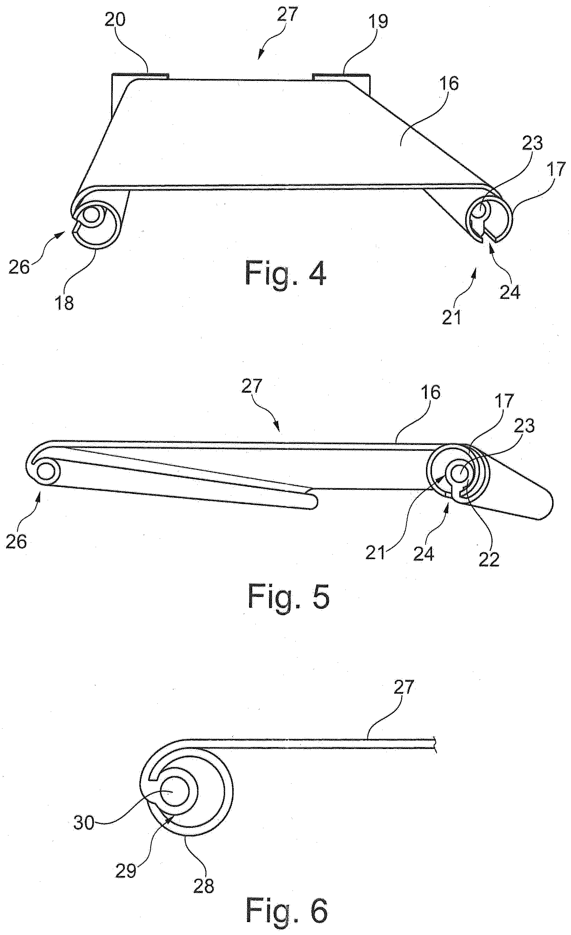

In Figur 6 ist in einem Ausschnitt ein Wickelelement 27 dargestellt, welches an seinem Ende eine Keder 29 aufweist und an einer Wickelwelle 28 angeordnet ist. Beispielsweise ist die erste Wickelwelle 28 als eine Kederleiste ausgebildet. Zur Verstärkung des Wickelelements 27, insbesondere der Keder 29, ist eine Kederleiste 30 vorgesehen. Mittels der Kederleiste ist das Wickelelement 27 in einer Richtung quer zur Längsachse der ersten Wickelwelle 28 an der ersten Wickelwelle 28 festgelegt.

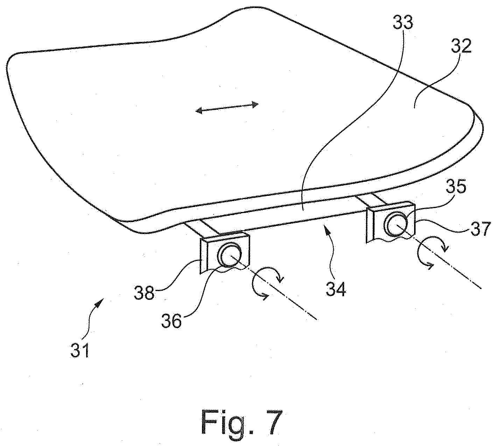

In Figur 7 ist eine Sitzflächengruppe 31 gezeigt. Die Sitzflächengruppe 31 weist ein Sitzflächenelement 32 auf, welches an einer Wickelelementfläche 33 eines Wickelelements 34 der Sitzflächengruppe 31 befestigt ist. Das Wickelelement 34 ist an einem ersten Ende an einer ersten Wickelwelle 35 und an einem zweiten Ende an einer zweiten Wickelwelle 36 befestigt. Beispielsweise sind die erste und die zweite Wickelwelle 35, 36 fest beabstandet vorhanden. Beispielweise ist die erste Wickelwelle 35 an einem ersten Drehlager 37 eines Fluggastsitz (in Figur 7 nicht gezeigt) und die zweite Wickelwelle 36 an einem zweiten Drehlager 38 des Fluggastsitz drehbar gelagert.

### Bezugszeichenliste

| | | | |
|---|---|---|---|
| 1 | Fluggastsitzreihe | 20 | Drehlager |
| 2 | Fluggastsitz | 21 | Ende |
| 3 | Fluggastsitz | 22 | Keder |
| 4 | Fluggastsitz | 23 | Kederleiste |
| 5 | Gestell | 24 | Schlitz |
| 6 | Sitzteiler | 25 | Federelement |
| 7 | Sitzteiler | 26 | Ende |
| 8 | Sitzteiler | 27 | Wickelelement |
| 9 | Holm | 28 | Wickelwelle |
| 10 | Holm | 29 | Keder |
| 11 | Sitzflächengruppe | 30 | Kederleiste |
| 12 | Rückenlehnenelement | 31 | Sitzflächengruppe |
| 13 | Rückenlehne | 32 | Sitzflächenelement |
| 14 | Rückenlehnenschale | 33 | Wickelelementfläche |
| 15 | Rahmen | 34 | Wickelelement |
| 16 | Wickelelement | 35 | Wickelwelle |
| 17 | Wickelwelle | 36 | Wickelwelle |
| 18 | Wickelwelle | 37 | Drehlager |
| 19 | Drehlager | 38 | Drehlager |

## Patentansprüche

1. Fluggastsitz (2), wobei der Fluggastsitz (2) ein Gestell (5), eine Sitzflächengruppe (11, 31) und ein Rückenlehnenelement (12) aufweist, wobei die Sitzflächengruppe (11, 31) ein Sitzflächenelement (32) aufweist, wobei das Sitzflächenelement (32) eine Sitzfläche bereitstellt, auf welcher ein Nutzer des Fluggastsitz (2) unmittelbar sitzen kann, wobei die Sitzflächengruppe (11, 31) ein Wickelelement (16, 34) und eine erste Wickelwelle (17, 35) aufweist, wobei ein erstes Ende des Wickelelements (16, 34) mit der ersten Wickelwelle (17, 35) verbunden ist, wobei die erste Wickelwelle (17, 35) um eine erste Wickelachse drehbar vorhanden ist, wobei bei einer Drehung der ersten Wickelwelle (17, 35) um die erste Wickelachse das Wickelelement (16, 34) im Bereich des ersten Endes des Wickelelements (16, 34) auf die erste Wickelwelle (17, 35) aufwickelbar oder von der ersten Wickelwelle (17, 35) abwickelbar vorhanden ist, wobei das Sitzflächenelement (32) mit dem Wickelelement (16, 34) verbunden ist, sodass bei einer Drehung der ersten Wickelwelle (17, 35) das Sitzflächenelement (32) bewegt wird, wobei das Sitzflächenelement (32) als eine Sitzschale oder als ein Sitzkissen ausgebildet ist, wobei das Sitzflächenelement (32) und das Wickelelement (16, 34) an einem Verbindungsbereich miteinander verbunden sind, **dadurch gekennzeichnet, dass** der Verbindungsbereich als eine Fläche vorhanden ist, an welcher das Sitzflächenelement (32) und das Wickelelement (16, 34) aneinander anstehen.

2. Fluggastsitz (2) nach dem vorhergehenden Anspruch 1, **dadurch gekennzeichnet, dass** die erste Wickelwelle (17, 35) unterhalb des Sitzflächenelements (32) ausgebildet ist.

3. Fluggastsitz (2) nach einem der vorhergehenden Ansprüche, **dadurch gekennzeichnet, dass** eine zweite Wickelwelle (18, 36) um eine zweite Wickelachse drehbar vorhanden ist, wobei die erste und die zweite Wickelwelle miteinander gekoppelt sind, sodass bei einer Drehung der ersten Wickelwelle (17, 35) aufgrund der Kopplung der Wickelwellen eine Drehung der zweiten Wickelwelle (18, 36) realisiert ist oder umgekehrt.

4. Fluggastsitz (2) nach einem der vorhergehenden Ansprüche, **dadurch gekennzeichnet, dass** das Wickelelement (16, 34) in Form eines Tuchs oder in Form eines Bands vorhanden ist.

5. Fluggastsitz (2) nach einem der vorhergehenden Ansprüche, **dadurch gekennzeichnet, dass** die erste Wickelwelle (17, 35) einen Schlitz (24) aufweist und das Wickelelement (16, 34) am Schlitz der ersten Wickelwelle (17, 35) in Form einer Nut-Feder-Verbindung mit dem ersten Ende des Wickelelements (16, 34) aufgeschoben vorhanden ist.

6. Fluggastsitz (2) nach dem vorhergehenden Anspruch 3, **dadurch gekennzeichnet, dass** ein Abstand der ersten Wickelwelle (17, 35) von der zweiten Wickelwelle (18, 36) unveränderlich vorhanden ist.

7. Fluggastsitz (2) nach einem der vorhergehenden Ansprüche, **dadurch gekennzeichnet, dass** der Fluggastsitz (2) ein Verriegelungselement aufweist, wobei eine Bewegung der ersten Wickelwelle (17, 35) und/oder eine Bewegung der zweiten Wickelwelle (18, 36) durch das Verriegelungselement blockierbar ist.

8. Fluggastsitz (2) nach einem der vorhergehenden Ansprüche, **dadurch gekennzeichnet, dass** die erste Wickelwelle (17, 35) von einer Ausgangsposition in eine Zwischenposition um die erste Wickelachse (17, 35) drehbar vorhanden ist, wobei der Fluggastsitz (2) ein Federelement (25) aufweist, wobei die erste Wickelwelle (17, 35) durch das Federelement (25) mit einer Federkraft des Federelements (25) beaufschlagt ist, sodass die erste Wickelwelle (17, 35) durch die Federkraft des Federelements (25) von der Zwischenposition in die Ausgangsposition zurückbewegbar ist.

9. Fluggastsitz (2) nach einem der vorhergehenden Ansprüche, **dadurch gekennzeichnet, dass** das Sitzflächenelement (32) lösbar mit dem Wickelelement (16, 34) verbunden ist.

10. Sitzreihe (1) mit einem Fluggastsitz (2) nach einem der vorangegangenen Ansprüche.

11. Flugzeug mit einem Fluggastsitz (2) nach einem der Ansprüche 1 bis 9 oder einer Sitzreihe (1) nach dem Anspruch 10.

## Claims

1. Aircraft passenger seat (2), wherein the aircraft passenger seat (2) has a surround (5), a seat face group (11, 31) and a backrest element (12), wherein the seat face group (11, 31) has a seat face element (32), wherein the seat face element (32) provides a seat face, on which a user of the aircraft passenger seat (2) can sit directly, wherein the seat face group (11, 31) has a winding element (16, 34) and a first winding shaft (17, 35), wherein a first end of the winding element (16, 34) is connected to the first winding shaft (17, 35), wherein the first winding shaft (17, 35) is provided so as to be able to be rotated about a first winding axis, wherein, when the first winding shaft (17, 35) is rotated about the first winding axis, the winding element (16, 34) is provided in the region of the first end of the winding element (16, 34) so as to be able to be wound on the first winding shaft (17, 35) or to be unwound from the first winding shaft (17, 35), wherein the seat face element (32) is connected to the winding element (16, 34) so that, when the first winding shaft (17, 35) is rotated, the seat face element (32) is moved, wherein the seat face element (32) is in the form of a seat shell or a seat cushion, wherein the seat face element (32) and the winding element (16, 34) are connected to each other at a connection region, **characterized in that** the connection region is provided as a face on which the seat face element (32) and the winding element (16, 34) are adjacent to each other.

2. Aircraft passenger seat (2) according to the preceding Claim 1, **characterized in that** the first winding shaft (17, 35) is formed below the seat face element (32).

3. Aircraft passenger seat (2) according to either of the preceding claims, **characterized in that** a second winding shaft (18, 36) is provided so as to be able to be rotated about a second winding axis, wherein the first and the second winding shafts are coupled to each other so that, when the first winding shaft (17, 35) is rotated, as a result of the coupling of the winding shafts a rotation of the second winding shaft (18, 36) is brought about or vice versa.

4. Aircraft passenger seat (2) according to one of the preceding claims, **characterized in that** the winding element (16, 34) is in the form of a cloth or in the form of a strip.

5. Aircraft passenger seat (2) according to one of the preceding claims, **characterized in that** the first winding shaft (17, 35) has a slot (24) and the winding element (16, 34) is provided in a state pushed onto the slot of the first winding shaft (17, 35) in the form of a tongue and groove connection with the first end of the winding element (16, 34).

6. Aircraft passenger seat (2) according to the preceding Claim 3, **characterized in that** a spacing of the first winding shaft (17, 35) from the second winding shaft (18, 36) is provided so as to be non-changeable.

7. Aircraft passenger seat (2) according to one of the preceding claims, **characterized in that** the aircraft passenger seat (2) has a locking element, wherein a movement of the first winding shaft (17, 35) and/or a movement of the second winding shaft (18, 36) can be blocked by the locking element.

8. Aircraft passenger seat (2) according to one of the preceding claims, **characterized in that** the first winding shaft (17, 35) is provided so as to be able to be rotated about the first winding axis (17, 35) from a starting position into an intermediate position, wherein the aircraft passenger seat (2) has a resilient element (25), wherein the first winding shaft (17, 35) is acted on by the resilient element (25) with a resilient force of the resilient element (25) so that the first winding shaft (17, 35) can be moved by the resilient force of the resilient element (25) from the intermediate position into the starting position.

9. Aircraft passenger seat (2) according to one of the preceding claims, **characterized in that** the seat face element (32) is releasably connected to the winding element (16, 34).

10. Seat row (1) having an aircraft passenger seat (2) according to one of the preceding claims.

11. Aircraft having an aircraft passenger seat (2) according to one of Claims 1 to 9 or a seat row (1) according to Claim 10.

## Revendications

1. Siège passager (2) d'aéronef, le siège passager (2) d'aéronef comportant un châssis (5), un groupe de surfaces de siège (11, 31) et un élément de dossier (12), le groupe de surfaces de siège (11, 31) comportant un élément de surface de siège (32), l'élément de surface de siège (32) fournissant une surface de siège, sur laquelle un utilisateur du siège passager (2) d'aéronef peut directement s'asseoir, le groupe de surfaces de siège (11, 31) comportant un élément d'enroulement (16, 34) et un premier arbre d'enroulement (17, 35), une première extrémité de l'élément d'enroulement (16, 34) étant reliée au premier arbre d'enroulement (17, 35), le premier arbre d'enroulement (17, 35) pouvant tourner autour d'un premier axe d'enroulement, l'élément d'enroulement (16, 34) présent pouvant être enroulé sur le premier arbre d'enroulement (17, 35) ou pouvant être déroulé du premier arbre d'enroulement (17, 35) dans la zone de la première extrémité de l'élément d'enroulement (16, 34) lors d'une rotation du premier arbre d'enroulement (17, 35) autour du premier axe d'enroulement, l'élément de surface de siège (32) étant relié à l'élément d'enroulement (16, 34) si bien que l'élément de surface de siège (32) est déplacé lors d'une rotation du premier arbre d'enroulement (17, 35), l'élément de surface de siège (32) étant réalisé comme une coque de siège ou comme un coussin de siège, l'élément de surface de siège (32) et l'élément d'enroulement (16, 34) étant reliés l'un à l'autre sur une zone de liaison, **caractérisé en ce que** la zone de liaison est présente comme une surface, sur laquelle l'élément de surface de siège (32) et l'élément d'enroulement (16, 34) se situent l'un sur l'autre.

2. Siège passager (2) d'aéronef selon la revendication précédente 1, **caractérisé en ce que** le premier arbre d'enroulement (17, 35) est réalisé sous l'élément de surface de siège (32).

3. Siège passager (2) d'aéronef selon l'une des revendications précédentes, **caractérisé en ce qu'**un deuxième arbre d'enroulement (18, 36) présent peut être tourné autour d'un deuxième axe d'enroulement, le premier et le deuxième arbre d'enroulement étant couplés l'un à l'autre si bien que lors d'une rotation du premier arbre d'enroulement (17, 35), une rotation du deuxième arbre d'enroulement (18, 36) est réalisée en raison du couplage des arbres d'enroulement, ou inversement.

4. Siège passager (2) d'aéronef selon l'une des revendications précédentes, **caractérisé en ce que** l'élément d'enroulement (16, 34) est présent sous la forme d'un tissu ou sous la forme d'une bande.

5. Siège passager (2) d'aéronef selon l'une des revendications précédentes, **caractérisé en ce que** le premier arbre d'enroulement (17, 35) comporte une entaille (24) et l'élément d'enroulement (16, 34) présent est enfilé par la première extrémité de l'élément d'enroulement (16, 34) sous la forme d'une liaison rainure-languette sur l'entaille du premier arbre d'enroulement (17, 35).

6. Siège passager (2) d'aéronef selon la revendication précédente 3, **caractérisé en ce qu'**une distance présente entre le premier arbre d'enroulement (17, 35) et le deuxième arbre d'enroulement (18, 36) est invariable.

7. Siège passager (2) d'aéronef selon l'une des revendications précédentes, **caractérisé en ce que** le siège passager (2) d'aéronef comporte un élément de verrouillage, un mouvement du premier arbre d'enroulement (17, 35) et/ou un mouvement du deuxième arbre d'enroulement (18, 36) pouvant être bloqués par l'élément de verrouillage.

8. Siège passager (2) d'aéronef selon l'une des revendications précédentes, **caractérisé en ce que** le premier arbre d'enroulement (17, 35) présent peut être tourné depuis une position de départ dans une position intermédiaire autour du premier axe d'enroulement (17, 35), le siège passager (2) d'aéronef comportant un élément de ressort (25), le premier arbre d'enroulement (17, 35) étant soumis par l'élément de ressort (25) à l'action d'une force de ressort de l'élément de ressort (25) si bien que le premier arbre d'enroulement (17, 35) peut être redéplacé depuis la position intermédiaire dans la position de départ par la force de ressort de l'élément de ressort (25).

9. Siège passager (2) d'aéronef selon l'une des revendications précédentes, **caractérisé en ce que** l'élément de surface de siège (32) est relié de manière amovible à l'élément d'enroulement (16, 34).

10. Rangée (1) de sièges avec un siège passager (2) d'aéronef selon l'une des revendications précédentes.

11. Aéronef avec un siège passager (2) d'aéronef selon l'une des revendications 1 à 9 ou une rangée (1) de sièges selon la revendication 10.
